# EUROPEAN PATENT APPLICATION

(11) **EP 1 634 698 A2**
(43) Date of publication of application: **15.03.2006**
(21) Application number: 05255456.5
(22) Date of filing: 07.09.2005
(51) Int. Cl.: B32B 27/12, D04H 13/00

(54) **Breathable elastic film and elastic nonwoven multilayer laminate and method for making same**

(30) Priority: 10.09.2004 US 937969
(71) Applicant: Cheng, Kenneth, Taipei City (TW); Shyuu, Eric, Taipei City (TW)
(72) Inventor: Cheng, Kenneth, Taipei City (TW); Shyuu, Eric, Taipei City (TW); Ward, Gregory F., Georgia 30022 (US)
(74) Representative: Gee, Steven William

(57) **Abstract**

The present invention describes a unique liquid impermeable elastic laminate comprised of elastic films and elastic-nonwovens that is rendered breathable during manufacture by creating rings of porosity surrounding the weld points used to bond the laminate during its manufacture.

## Description

### BACKGROUND OF THE INVENTION

### 1. Field of the Invention

The invention relates generally to elastic laminates comprised of elastic films and elastic nonwovens and specifically to a point bonded elastic nonwoven/elastic film/ elastic nonwoven laminate that is made breathable during manufacture by creating a degree of porosity at the weld points used to bond the laminate.

### 2. Related Art

There is a well-known need to improve the fit and comfort of disposable diapers, training pants, other disposable sanitary products and the like in the consumer disposable market. Laminates that deliver high elasticity coupled with high elastic recovery and breathability are being sought as the means to satisfy this need. It is also desirable that the elastic laminate has only two-way stretch.

Disposable personal care and health care items are often breathable, a barrier to liquids, and strong enough to endure handling in normal use. Breathable means gas or water vapor permeable, liquid barrier means impermeable to liquid, and strength relates to tensile properties. While it is possible to enhance each of these properties of polymer films separately, enhancing the breathability of polymer films while maintaining the liquid barrier and strength properties of the film is difficult. For example, certain polymers are more breathable than others but have unsatisfactory barrier and tensile properties. Other polymers have superior barrier or tensile properties, but are not sufficiently breathable. Accordingly, there is a need for a polymeric film with enhanced breathability and desirable barrier and strength properties for use in making personal care items, health care items and the like.

In the past, techniques used to achieve high stretch in nonwoven laminates would frequently result in damage to the laminate components thus resulting in reduced laminate strength, especially tensile strength. In addition, the laminates produced by prior techniques often lack sufficient elastic recovery to function effectively in desired applications.

Perforating the film before laminating it to the nonwoven is a simple method of providing breathability for these laminates. Unfortunately the perforations tend to be liquid permeable and are not acceptable

Breathability can also be generated by perforating the film using other perforation processes, which are known to those with normal skill in the art such as perforating the film after laminating the film to the nonwoven. But these perforation processes result in various points of weakness on the overall laminate. The points of weakness often become tear initiation points and consequently the passage of liquid.

In much of the prior art many awkward and expensive steps must be followed to create a laminate having the desired properties. For example US Patent 6,537,930 to Middlesworth et al. and its related divisional US Patent 6,720,279 to Cree et al. has an inherent problem providing stretchability and breathability. This is due to the fact that the weld points are substantially inelastic and must be ruptured to form apertures. The user accomplishes this step when the laminate is stretched in a cross-machine direction to an elongation of about 200%. This creates a problem for the product end-user because the large amount of stretch required is not typically reached in product use. When the product is prestretched during manufacture the substantially inelastic weld points, in many cases may turn into holes that create leakage points for the disposable absorbent products to which they are attached.

Therefore it is necessary to develop a highly elastic laminate and a method for making the same that has high elasticity combined with high elastic recovery for use in disposable products. In addition, it is desirable to develop a laminate and a method for making the same that eliminates the tear initiation points that form on prior art laminates. Finally, there is a need to reduce the number of steps needed to create the laminate while maintaining the above described desirable performance properties.

### SUMMARY OF THE INVENTION

This invention satisfies the above-described needs by providing a breathable elastic polymer film nonwoven laminate wherein a substantial and commercially adequate water vapor transmission rate or breathability means is generated during the lamination step The resultant film of this invention is breathable, but retains its strength and liquid barrier properties for use in applications such as disposable absorbent personal care and health care products, garments, and other covering materials. The degree of film breathability is illustrated by the water vapor transmission rate of the film. The water vapor transmission rate of the polymer film of this invention is desirably within the range from about 300 to more than 1,500 g/m² /24 hrs.

The present invention provides a unique multi-layered laminate consisting of unique elastic nonwoven, an elastic film and unique elastic nonwoven. U.S. Patent 6,746,978 issued June 8, 2004 to Gregory F. Ward teaches the method to create the unique elastic nonwoven, and is incorporated by reference. This unique laminate is limited to cross-machine direction elasticity by virtue of the properties of the elastic nonwoven component of the laminate and is fluid impermeable. However, due to the laminate's unique conditions of manufacture, air and water vapor permeable properties are created within the elastic film at the periphery of the weld points during the lamination step.

The layers of the laminate are welded together at discrete points during the lamination step. In one embodiment, an ultrasonic horn and patterned rotary anvil is used to weld the laminate. After welding, the following distinct regions are formed on the laminate: non-welded regions, weld or bond regions, and transition regions. The non-welded transition regions are the areas of the laminate surrounding the weld points. The weld points are where the actual elastic nonwoven-to-elastic film bonds forms. The non-welded transition regions are the peripheral areas surrounding the weld point containing amorphous masses of film based polymer and nonwoven fiber that are created during the welding step.

It was unexpectedly discovered that these non-welded transition regions were able to provide water vapor transport at commercially viable rates ranging from 300 g/m² /24 hours to 1500 g/m² /24 hours.

### TERMINOLOGY DEFINITIONS

Bicomponent or multicomponent fibers: As used herein the term "bicomponent or multicomponent fibers" refers to fibers which have been formed from at least two polymers extruded from separate extruders but spun together to form one fiber. Multicomponent fibers are also sometimes referred to as conjugate or bicomponent fibers. The polymers of a multicomponent fiber are arranged in substantially constantly positioned distinct zones across the cross-section of the fiber and extend continuously along the length of the fiber. The configuration of such a fiber may be, for example, a sheath/core arrangement wherein one polymer is surrounded by another or may be a side-by-side arrangement, a pie arrangement or an "islands-in-the-sea" arrangement. Multicomponent fibers are taught in U.S. Pat. No. 5,108,820 to Kaneko et al., U.S. Pat. No. 4,795,668 to Krueger et al. and U.S. Pat. No. 5,336,552 to Strack et al. For bicomponent fibers, the polymers may be present in ratios of 75/25, 50/50, 25/75 or any other desired ratios.

Bonding Window: As used herein, the term "bonding window" means the range of temperature of the mechanism, e.g. a pair of heated bonding rolls, used to bond the nonwoven fabric together, over which such bonding is successful.

Breathable: As used herein, the term "breathable" refers to a material which is permeable to water vapor and having a minimum WVTR (water vapor transmission rate) of about 300 g/m² /24 hours. The WVTR of a material is its water vapor transmission rate which provides an indication of how comfortable a fabric would be to wear. WVTR is measured as indicated below and the results are reported in grams/square meter/day. However, often applications of breathable barriers desirably have higher WVTRs and breathable laminates of the present invention can have WVTRs exceeding about 800 g/m² /day, 1500 g/m² /day, or even exceeding 3000 g/ g/m² /day. A standard test for determining the water vapor transmission rate is ASTM E96-80

Elastic: As used herein "elastic" means a material which, upon application of a stretching force, is stretchable, that is extensible, to a stretched, length which is at least 150% of its relaxed unstretched length, and which will retract at least 50 percent of its elongation upon release of the elongating force. A hypothetical example would be a one (1) inch sample of a material which is elongatable to at least 1.50 inches and which, upon release of the stretching force, will retract to a length of not more than 1.25 inches.

Fluid: As used herein "fluid" may mean a liquid or a gas.

GSM: As used herein "gsm" means grams per square meter (gm/m²⁾ and is a measure of the areal weight of the laminate with its component webs.

Machine Direction: As used herein, the term Machine Direction or MD means the length of a fabric in the direction in which it is produced. The term "cross machine direction" or CD means the width of fabric, i.e. a direction generally perpendicular to the MD.

Nonwoven: As used herein the term "nonwoven" fabric or web means a web having a structure of individual fibers or threads, which are interlaid, but not in an identifiable manner as in a meshed or knitted fabric. Nonwoven fabrics or webs have been formed by many processes such as, for example, meltblowing processes, spunbonding processes, hydroentangling, air-laid and bonded carded web processes.

Point Bonding: As used herein "point bonding" means bonding one or more fabrics and films using a plurality of discrete weld points. For example, thermal point bonding generally involves passing one or more layers to be bonded between heated rolls such as, for example, an engraved pattern roll and a smooth calender roll. The engraved roll is patterned and the anvil roll is usually flat. As a result, various point bond patterns for engraved rolls have been developed for functional as well as aesthetic reasons. Bonded area can range from less than 10% to greater than 50 % of the total area. Point bonding can also be accomplished by ultrasonic welding devices.

Polymer: As used herein the term generally includes but is not limited to, homopolymers, copolymers, such as for example, block, graft, random and alternating copolymers, terpolymers, etc. and blends and modifications thereof. Furthermore, unless otherwise specifically limited, the term "polymer" includes all possible spatial configurations of the molecule. These configurations include, but are not limited to isotactic, syndiotactic and random symmetries.

Spunbond Fibers: As used herein the term "spunbond fibers" refers to small diameter fibers of substantially molecularly oriented polymeric material. Spunbond fibers may be formed by extruding molten thermoplastic material as filaments from a plurality of fine, usually circular capillaries of a spinneret with the diameter of the extruded filaments then being rapidly reduced as by, for example, in U.S. Pat. No. 4,340,563 to Appel et al., and U.S. Pat. No. 3,692,618 to Dorschner et al. and U.S. Pat. No. 5,382,400 to Pike et al. Spunbond fibers are often about 10 microns or greater in diameter.

Ultrasonic Bonding: As used herein, "ultrasonic bonding" means a process performed, for example, by passing the a laminate of polymeric materials in web between a specialized sonic horn and anvil roll whereby a patterned weld is created. Examples of such systems are illustrated in Branson Corporation's Applied Technologies Group technical literature Product Data Sheet PW-48 Radial Ultrasonic Actuator and other references, which are included herein by reference.

### BRIEF DESCRIPTION OF THE DRAWINGS

For a better understanding of the invention, as well as other objects and features thereof reference is made to the accompanying drawings wherein:
FIG. 1 is a cross-section of the three layered laminate consisting of a unique elastic nonwoven, an elastic film and a unique elastic nonwoven of the present invention before the laminating and welding step.
FIG. 2 is a cross-section view of a single weld in the three-layered laminate.
FIG. 3 is a cross-section of the composite showing the weld and the amorphous area surrounding it after the composite has undergone the welding step.

### DETAILED DESCRIPTION OF THE INVENTION

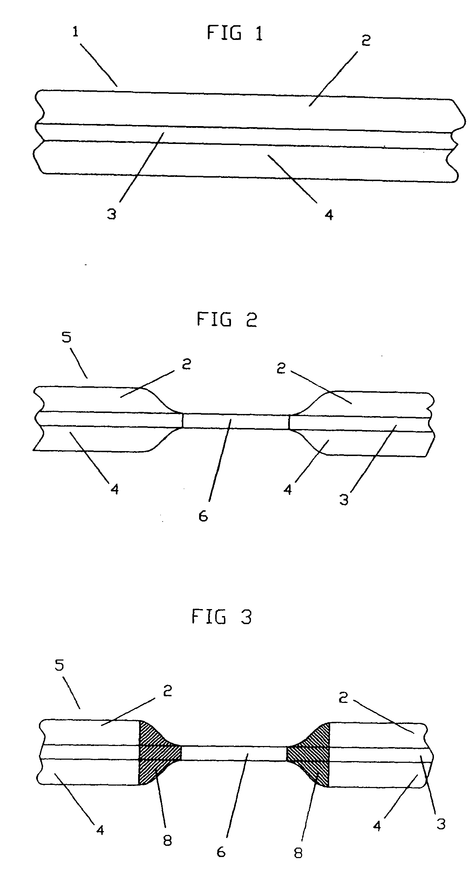

FIG. 1 shows a cross section of the highly elastic film/elastic nonwoven laminate **1** that has high extensibility in the cross-machine direction. The laminate includes a first or top elastic nonwoven layer **2,** an impervious film core layer **3** and a second or bottom elastic nonwoven layer **4.**

The elastic nonwoven layers **2, 4** are composed of spunbonded fibers and are, per se, breathable. The spunbonded fibers may be homopolymers, bicomponent or blended fibers. Preferably the elastic nonwoven has an areal weight of around 15 to 50 gsm for each side. The film core layer **3** may be produced from various elastic polymers, but the materials must be initially impervious to fluid and air. In the instant example, an elastomeric polyurethane film having a thickness of 0.02 to 0.03 mm is used. In another embodiment the core layer **3** may be comprised of a multi-layer film. Alternate elastomeric films may also be used as the core layer **3,** such as a single layer elastomer, or a foam layer, but such films must be comprised of liquid and air impervious materials.

The core layer **3** may also be comprised of a film of other highly-elastic compounds, such as block copolymers which are composed of long sequences ("blocks") of the same monomer unit (A), covalently bound to sequences of unlike type (B). The blocks can be connected in a variety of ways; schematics of AB diblock and ABA triblock structures Usually such a compound exhibits relatively good elastic recovery or low set from stretching over 100 percent when extruded alone as a single layer. In certain preferred embodiments, the elastomeric materials can comprise high performance elastomeric material such as styrene/isoprene/styrene, styrene/isoprene/butadiene or styrene/ethylene-butylenes/styrene (SIS, SBS, or SEBS) or Kraton™. elastomeric resins from the Shell Chemical Co., which are elastomeric block copolymers. The particular morphology of the block copolymers may have significant effect on the bulk mechanical and permeation properties.

Other useful elastomeric compositions for use as a core layer **3** can include ethylene copolymers, such as ethylene vinyl acetates, ethylene/propylene copolymer elastomers or ethylene/propylene/diene terpolymer elastomers. Blends of these polymers alone or with other modifying elastic or non-elastomeric materials are also considered as being useful with the present invention.

To form the elastic nonwoven/elastic film/elastic nonwoven laminate **1,** first and second webs of spunbond fibers are treated according to the teachings described in U.S. Pat. No. 6,746,978 to Ward, which is incorporated herein by reference. The result of this process is the first and second elastic nonwoven layer sheets **2, 4.** The elastic film/nonwoven laminate (FIG. 1) is created by laminating the core layer **3** between the elastic nonwoven sheets **2, 4.**

A combination of force and thermal/fusion energy, such as ultrasonic welding, thermal point bonding or thermal contact welding, is used to combine the three layers **2, 3, 4**, at discrete weld points **6** to form a point welded elastic film/elastic nonwoven laminate **5** as shown in FIGS. 2 and 3. In a preferred embodiment shown in FIGS. 2 and 3, ultrasonic welding is used to form weld points **6** that join the elastic nonwoven layers **1, 3** and the impervious film core layer **2.** The weld points **6** ideally occupy between about 3% to about 40% of the total surface area of the laminate in FIG. 2. It was determined that weld points **6** should have a diameter from about 0.4 mm to about 1.5 mm. Ideally the spacing of weld points in the cross-machine direction from centerline-to-centerline should be about 2.5 mm to 10 mm. Ultrasonic welding, which is well known to those having ordinary skill in the art, is the preferred method of forming weld points. Other suitable methods may be used, including thermal contact welding and passing one or more layers to be bonded between patterned heated rolls create weld points **6** corresponding to the pattern of the heated rolls. In the instant example the three component layers were combined by passing them between a sonic horn and an anvil. The resulting combination was an overall pattern bond.

After welding, the following distinct regions are formed on the laminate: non-welded regions, bond regions or weld points, and transition regions **8.** The non-welded transition regions **8** are the areas of the laminate surrounding the weld points. The weld points are where the actual elastic nonwoven-to-elastic film bond forms. The non-welded transition regions are the peripheral areas surrounding the weld point containing amorphous masses of film based polymer and nonwoven fiber that are created during the welding step.

It is noted that the surprisingly unique morphology that was created around the welded point bonds by the conditions of point bonding exhibited a significant degree of breathability. Depending on the areal weight of the elastic film and the elastic nonwoven as well as the pressure, temperature and weldability of the polymers used in the film and nonwoven, a widely varying degree of breathability as measured by water vapor transmission (WVTR) is observed. These rates ranged from 300 g/m² /24 hours to 2500 g/m² /24 hours. The degree of water vapor transport is dependent on a wide diversity of material characteristics and process conditions. This included the film polymer type, film thickness, weld energy input levels, size of welds and weld density, nonwoven material differences, basis weight and fiber diameter. It was determined that there was no formulaic solution to derive process conditions. Consequently water vapor transport was determined for each set of conditions and materials. Significantly, it was also discovered that, within the bonding window conditions, that liquid impermeability was not compromised. It is believed that the structure of the unique elastic nonwoven used plays a large part in the breathability of the laminate.

Consequently an elastic film/elastic nonwoven laminate can be formed wherein a commercially acceptable breathability, as measured by water vapor transmission rate, can be attained. As will be appreciated by those skilled in the art, the various parameters of this invention may be adjusted depending on the application, including varying the weight of the elastic nonwoven layers and the selection of the polymers for use as the impervious core film layer of the elastic film/elastic nonwoven laminate web, the thickness of the elastic film, as well as the size and number of the weld points.

Referring now to FIG. 3, the cross-section of the elastic nonwoven/elastic film/elastic nonwoven laminate **1** is shown after undergoing welding processes to form weld points **6** which are shown as being comprised of the distinct section **8.** The weld points **6** are where the actual elastic nonwoven-to-elastic film bond forms. The central portion of the weld point **6** is a round, relatively clear section of film containing imbedded fibers from the welding step. Surrounding the relatively clear section of the weld point is a narrow peripheral area **8** containing amorphous masses of film based polymer and nonwoven fiber that are created during the welding step. These partially welded amorphous transition regions **8** are the areas that apparently transport water vapor since the greater the number of weld points or more succinctly, the greater the area of amorphous transition regions then the greater is the rate of water vapor transport.

The resulting welded elastic nonwoven/elastic film/elastic nonwoven laminate **1** of FIGs. 1 and 2 has high elasticity in the cross-machine direction, which is the direction transverse to the direction that the laminate and resulting welded laminate travel during the welding process. The welded laminate of FIG 2 resists stretching in the machine direction, which is parallel to the machine direction of the laminate **1** production and the resulting welded laminate **1** travel during the welding process. The welded film/nonwoven laminate **1** has a final weight in the range of about 15-200 gsm.

Those skilled in the art will now see that certain modifications can be made to the invention herein disclosed with respect to the illustrated embodiments, without departing from the spirit of the instant invention. And while the invention has been described above with respect to the preferred embodiments, it will be understood that the invention is adapted to numerous rearrangements, modifications, and alterations, and all such arrangements, modifications, and alterations are intended to be within the scope of the appended claims.

## Claims

1. A multi-layered elastic and breathable laminate comprised of a unique elastic nonwoven, an elastic film and a unique elastic nonwoven further comprising:
a fluid and air impervious core elastic film layer having a first side and a second side;
a first elastic nonwoven layer point bonded by a plurality of weld points to said first side of said core layer;
a second elastic nonwoven layer point bonded by a plurality of weld points to said second side of said core layer; and
wherein said weld points comprise the nucleus of an amorphous transition layer surrounding said weld points whereby said amorphous layer provides breathability to said laminate.

2. The multi-layered laminate of claim 1, wherein said elastic film is comprised of a material selected from a group consisting of an elastomeric film, a foam, and a multi-layer film.

3. The multi-layered laminate of claim 1, wherein said first nonwoven layer and said second nonwoven layer are comprised of bicomponent fibers.

4. The multi-layered laminate of claim 1, wherein said first nonwoven layer and said second nonwoven layer are comprised of blended fibers.

5. The multi-layered laminate of claim 1, wherein said elastic film is comprised of a material selected from the elastomeric film group consisting of elastic block copolymers and elastic copolymers.

6. The multi-layered laminate of claim 1, wherein said weld points occupy between about 5% to about 35% of the total surface area of said laminate.

7. The multi-layered laminate of claim 1, wherein said weld points have a diameter of from about 0.4 mm to about 1.5 mm.

8. The multi-layered laminate of claim 1, wherein the centerlines of said weld points are spaced from about 2.5 mm to about 10 mm apart.

9. The multi-layered laminate of claim 1, wherein said centers of adjacent weld points form a diamond pattern.

10. The multi-layered laminate of claim 1, wherein the breathability is at least 300 gm/m2/24 hours as measured by water vapor transmission rate using ASTM test method E96-80.

11. The three-dimensional highly elastic film/non-woven composite of claim 1, wherein said first nonwoven layer and said second nonwoven layer are comprised of elastic webs created by hot stretching at strain rates of less than about 40 centimeters per centimeter per minute.

12. The multi-layered laminate of claim 1, wherein said first and second elastic nonwoven layers are comprised of bicomponent fibers.

13. The multi-layered laminate of claim 1, wherein said elastic film layer is comprised of a laminate of two or more elastic films

14. A method for forming a multi-layer elastic laminate consisting of a unique elastic nonwoven, an elastic film and a unique elastic nonwoven comprising the steps of:
simultaneously point bonding a first elastic nonwoven layer to a first side of an air and fluid impermeable elastic core film layer and point bonding a second elastic nonwoven layer to a second side of an air and fluid impermeable elastic core film layer;
said bonding forming weld points wherein said weld points comprise the nucleus of an amorphous layer surrounding said weld points whereby said amorphous layer provides breathability to said laminate.

15. The method of claim 14, wherein said process of point bonding said first and said second elastic nonwoven layers to said core elastic film is achieved by the conditions of ultrasonic welding.

16. The method of claim 14, wherein said process of point bonding said first and said second elastic nonwoven layers to said air and fluid impermeable elastic core film layer is achieved by a combination of force and thermal energy.

17. The method of claim 14, wherein said step of point bonding said first and said second nonwoven layers is achieved by thermal point contact welding between diamond patterned heated rolls wherein said weld points occupy between about 5% to about 35% of the total surface area of said heated rolls.

18. The method of claim 17 wherein said weld points have a diameter of from at least about 0.4 mm to about 1.5 mm.

19. The method of claim 17 wherein said centerlines of said weld points are spaced from about 2.5 mm to about 10 mm apart.
